# EUROPEAN PATENT SPECIFICATION

(11) **EP 0 919 094 B1**
(45) Date of publication and mention of the grant of the patent: **09.01.2002**
(21) Application number: 98902141.5
(22) Date of filing: 19.02.1998
(51) Int. Cl.: H04M 1/72

(54) **MOBILE PHONE SWITCHBOARD**
MOBILTELEFON MIT EINER VERMITTLUNGSANLAGE-FUNKTION
STANDARD TELEPHONIQUE MOBILE

(30) Priority: 20.02.1997 GR 97100069
(43) Date of publication of application: 02.06.1999
(73) Proprietor: Giannatos, Georgios, 151 21 Athens (GR)
(72) Inventor: Giannatos, Georgios, 151 21 Athens (GR)
(86) International application number: PCT/GR98/00006
(87) International publication number: WO 98/37684

(56) References cited:
- EP-A- 0 243 900
- WO-A-92/04798
- US-A- 4 538 029
- US-A- 4 706 274
- US-A- 4 866 753
- US-A- 5 524 045
- HOGG R ET AL: "MARRIAGE OF CONVENIENCE: INTEGRATING CORDLESS HANDSET FUNCTIONALITYINTO KEY-TERMINALS" PHILIPS TELECOMMUNICATION REVIEW, vol. 52, no. 1, 1 March 1994, pages 52-55, XP000435517

## Description

### Technical field where invention aims

This invention refers to a mobile phone unit which consists of keyboards for dialing, registering, selection of the operation menus of the unit, screen, aerial, and rechargeable battery.

### Level of previous technology and assessment of it

Equipment of such type is already known. These devices are loaded with a secret PIN code, for example 5555, and a calling code for example 094 - 802350.

Use of this device is restricted to only one person at a time, therefore resulting to a high fixed operation cost and on the other hand control on the cost of use can only be performed by the person which operates it.

The above results to the fact that this device cannot be used by third party, such as disabled people or children and so on, with controlled operation costs.

### Introduction of the invention

The mobile phone switchboard consists of a central unit (handset) which operates as a mobile switching centre connected to several phone handsets 1, 2, 3,...9 or more. It is similar to the existing mobile phone devices and is equipped with 4 extra illuminated buttons (Ing., Tran., I, II). The Ing for the Inquiry button is used to block every Incoming call to:
a. Change the communication of the calls.
b. Pick a new number of a connected phone unit or another mobile or conventional (wired) telephone number.

The Tran button, for transfer, can transfer incoming calls to an internal or external phone unit that we have selected.

The button I illuminates with the first incoming or outgoing call. ,

The button II illuminates with the second incoming or outgoing call.

The mobile phone switchboards are capable of:
1. Handling a conversation with more than one internal or external telephone lines.
2. Receive and transfer, if it is required, calls from internal phone units 1, 2, 3,...9 or other mobile or conventional telephone numbers.
3. To select the phone units that can directly accept incoming calls. (Not through the switchboard).
4. To select which internal units can remain available to communicate with other internal or external phone units. (not through the switchboard).
5. To cut off all communications of all connected units by operating the Off button on the central unit
6. To display on the central unit:
   a. The number of the unit that is engaged.
   b. The total cost of the call.

### Advantages of the invention

With the introduction of the mobile switchboard, the use of mobile phones is extended to third party, such as disabled people and specially children, with controlled operation cost. Parents can communicate at anytime with their children and vice versa with controlled cost through the central unit. I

There is an opportunity for the mobile phone makers to increase their business by introducing new products in their range, (Portable switching handsets- switchboards- of mobile phones), while the existing mobile phones will be used as internal units or stand alone units.

There is an increased efficiency in the use of the existing telephone network under a lower operating cost by introducing a multiple connection point of mobile phone units.(Multiple use of mobile phones via one or more numbers).

Increased number of users and the market for mobile phones.

Reduced operation costs for consumers (i.e. the fixed cost for the central unit plus a small fee for any extra unit attached to it),

### How it works

| MOBILE PHONE SWITCHBOARD | PIN | DIALING NUMBER |
|---|---|---|
| Central unit | 5550 | 094-802380 |
| Internal unit No. 1 | 5551 | 094-802381 |
| Internal unit No. 2 | 5552 | 094-802382 |
| - | - | - |
| Internal unit No. 9 | 5559 | 094-802389 |

### 1. INCOMING CALL

a) Regardless the number which is called 094-802380... 094-802389, all incoming calls pass through the central unit i.e. switchboard (dialing number 094-802380).
   In the case in which the central unit operator wishes to transfer the incoming call to another intemal unit, either mobile phone or conventionally wired phone, presses the button ing., selects the number of the unit or the phone number to which wishes to transfer the call (for example intemal unit No 3, 094-802383) and transfers the call by pressing the button Tran.
b) Through menu (for example No 2), the central unit can operate as
   Direct Inward Dialing (D.I.D). i.e. the central unit can let free access to the telephone network to as many internal units as it wishes from No. 1 to...No. 9 in order to receive direct calls not through the central unit.

Example: 1)Press the button Menu and the button 21 to let access to intemal unit No. 1.
2) Press the button Menu and the button 22 to let access to internal unit No. 2.
3) Press the button Menu and the button 29 to let access to internal unit No. 9.
4) Press the button Menu and the button 20 to let access to all internal units.

In this way somebody can directly select the unit on which wishes to be connected. (For example unit No. 3 calls 094-802383.)

### 2. OUTGOING CALL

a) All the internal units communicate through the central switching unit (dialing number 094-802380). The central unit can transfer the call to another internal unit or telephone number by pressing of the buttons Ing. & Tran. Like in the example 1. a
b) Through menu (For example No 3), the central unit can let as many internal units as it wishes starting from No 1.. No. 9, to be able to make direct calls that are not controlled by the central unit.

Example: 1)Press the button Menu and the button 31 in order to let the internal unit No.1 to make outgoing calls.
2) Press the button Menu and the button 32 to let the internal unit No. 2 to make outgoing calls.
3) Press the button Menu and the button 39 to let the intemal unit No. 9.
4) Press the button Menu and the button 30 in order to let all the internal units attached to the central unit to be able to make outgoing calls.

By the use of menu No. 2 and menu No. 3 the central unit can block or let through incoming or outgoing calls or both to pre - selected internally attached units. (For example by pressing menu 23 and menu 33 the internal unit becomes autonomous to incoming or outgoing calls.

### 3. CONVERSATION WITH MORE THAN ONE CALLS

With the first incoming call, button I illuminates. If there is a second call then button II illuminates too.

When the user does not want to speak with incoming call No. 1 and wishes to speak with incoming call No. 2, presses button Ing. to block incoming call No. 1 and then by pressing the button II speaks with the 2nd call.

In case he wishes to come back to call No. 1, presses the button Ing. blocks the 2nd call and by pressing the button I speaks to the 1st call.

If he wishes to keep the 1st line and speak with a new line, presses the button Ing., blocks the 1st line and then selects the new number of the line with which wishes to speak

## Claims

1. A central unit for selectably controlling connections between a plurality of secondary mobile phones and a telephone network, comprising:
- first means for switching each of said plurality of secondary mobile phones between a first outgoing state, wherein said secondary mobile phone can place calls to said telephone network, and a second outgoing state wherein the secondary mobile phone is blocked form placing calls to said telephone network; and
- second means for switching each of said plurality of secondary mobile phones between a first ingoing state, wherein said secondary mobile phone can receive calls form said telephone network, and a second ingoing state wherein the secondary mobile phone is blocked from receiving calls from said telephone network.

2. The central unit according to claim 1, further comprising:
third, means for receiving incoming calls for secondary mobile phones in said second ingoing state and for selectively routing said incoming calls to one of said secondary mobile phones.

3. The central unit, according to claim 1 or 2, further comprising:
fourth means for receiving outgoing calls from secondary mobile phones in said second ingoing state and for selectively connecting received outgoing calls to another secondary mobile phone or to said telephone network.

4. The central unit according to claim 1 wherein said first and second means comprises a first button.

5. The central unit according to claims 2 or 3 wherein said third or said fourth means comprises a second button.

6. The central unit according to claim 1, 2 or 3 wherein said first to fourth means comprises means for selecting an option form a menu.

7. The central unit according to claim 1,2 or 3, further comprising a first indicator, indicating that a first call has been received at the central unit, and a second indicator, indicating that a second call has been received at the central unit.

8. A method for selectably controlling connections between a plurality of mobile phones and a telephone network comprising the steps of: providing a phone controller comprising a first mobile phone; providing a plurality of secondary mobile phones, each one of said secondary phones being switchable between a first outgoing state wherein said secondary phone can place calls to said network and a second outgoing state wherein said secondary phone is blocked from placing calls to said network and being switchable between a first incoming state wherein said secondary phone can receive calls from said network and a second incoming state wherein said secondary phone is blocked from receiving calls from said network; and using said controller: to independently control said incoming and outgoing states of said secondary mobile phones; to receive incoming calls for said secondary phones in second incoming state and selectively route said received calls to one of said secondary phones; and to receive outgoing calls from said secondary phones in said second outgoing state and selectively connect said received calls to said network.

9. The method of claim 8 wherein the step of using said controller to independently control the incoming and outgoing states of said secondary mobile phones comprises the step of actuating a first button means on said phone controller.

10. The method of claim 8 wherein the step of using said controller to independently control the incoming and outgoing states of said secondary mobile phones comprises the step of selecting an option from a menu on said phone controller.

11. The method of claim 8 wherein the step of using said controller to receive selectively route said received calls to one of said secondary phones comprises the step of actuating a second button means on said phone controller.

12. The method of claim 8 wherein the step of using said controller to receive incoming calls for said secondary phones in said second incoming state and selectively route said received calls to one of said secondary phones comprises the step of selecting an option from a menu on said phone controller.

13. The method of claim 11 wherein said phone includes a first indicator for indicating that a first call has been received at said controller and a second indicator for indicating that a second call has been received at said controller.

14. A mobile phone control system for selectably controlling connections between a plurality of mobile telephones and a telephone network comprising: a phone controller comprising a first mobile phone; a plurality of secondary mobile phones, each one of said secondary phones being switchable between a first outgoing state wherein said secondary phone can place calls to said network and a second outgoing state wherein said secondary phone is blocked from placing calls to said network and being switchable between a first incoming state wherein said secondary phone can receive calls from said network and a second incoming state wherein said secondary phone is blocked from receiving calls from said network; and, wherein said controller functions to: independently control said incoming and outgoing states of said secondary mobile phone; receive incoming calls for said secondary phones in said second incoming state selectively route said received calls to one of said secondary phones; and, receive outgoing calls from said secondary phones in said second outgoing state and selectively connect said received calls to said network.

15. The system of claim 14 wherein said controller comprises a first button means for controlling the incoming and outgoing states of said secondary mobile phones.

16. The system of claim 14 wherein said controller comprises menu means for allowing a user to control the incoming and outgoing states of said secondary mobile phones.

17. The system of claim 14 wherein said controller comprises a second button means for selectively routing said received calls to one of said secondary phones.

18. The system of claim 14 wherein said controller comprises menu means for allowing a user to selectively route said received calls to one said secondary phones.

19. The system of claim 17 wherein said phone controller includes a first indicator for indicating that a first call has been received at said controller and a second indicator for indicating that a second call has been received at said controller

20. The system of claim 14 wherein said phone controller includes display means for displaying information on the length or cost of a call to or from one of said secondary phones.

21. The system of claim 14 wherein said phone controller includes display means for displaying information on the incoming state status and outgoing state status of said secondary phones.

22. The system of claim 14 wherein said phone controller includes display means for displaying information identifying the secondary phone to which a particular received call is directed.

23. A method for selectably controlling the cost of connecting a plurality of mobile telephones to a telephone network comprising the steps of: providing a phone controller comprising a first mobile phone; providing a plurality of secondary mobile phones, each on of said secondary phones being switchable between a first outgoing state wherein said secondary phone ca place calls to said network and incur network charges and a second outgoing state wherein said secondary phone is blocked from placing calls to said network and blocked from incurring network charges and being switchable between a first incoming state wherein said secondary phone can receive calls from said network and a second incoming state wherein said secondary phone is blocked from receiving calls from said network; and, using said controller: to control network charges incurred by said plurality of secondary mobile phones by independently controlling said incoming and outgoing states of said secondary mobile phones; to receive incoming calls for said secondary phones in second incoming state and selectively route said received calls to one of said secondary phones; and, to receive outgoing calls from said secondary phones in said second outgoing state and selectively connect said received calls to said network.

24. The method of claim 23 wherein said plurality of secondary phones are blocked from incurring network charges when in said second incoming state.

## Patentansprüche

1. Eine Zentralvorrichtung für wählbar kontrollierende Verbindungen zwischen einer großen Anzahl von Neben-Mobiltelefonen und einem Fernsprechnetz, bestehend aus:
1. Mittel zum Umschalten jedes Anschlusses aus der besagten großen Anzahl von Neben-Mobiltelefonen von einem ersten Ausgangsmodus, in dem das besagte Neben-Mobiltelefon einen Anruf zum besagten Fernsprechnetz tätigen kann, in einen zweiten Ausgangsmodus, in dem das Neben-Mobiltelefon für Anrufe an das besagte Telefonnetz gesperrt ist; und
2. Mittel zum Umschalten jedes Anschlusses aus der besagten großen Anzahl von Neben-Mobiltelefonen von einem ersten Eingangsmodus, in dem das Neben-Mobiltelefon Anrufe aus besagtem Fernsprechnetz empfangen kann in einen zweiten Eingangsmodus, in dem das Neben-Mobiltelefon gesperrt ist, eingehende Anrufe aus besagtem Fernsprechnetz zu empfangen.

2. Die Zentralvorrichtung gemäß Anforderung 1, weiterhin bestehend aus:
3. Mittel zur Annahme eingehender Anrufe an Neben-Mobiltelefone im besagten zweiten Eingangsmodus und zum selektiven Umleiten der besagten eingehenden Anrufe an eines der besagten Neben-Mobiltelefone.

3. Die Zentralvorrichtung gemäß Anforderung 1 oder 2, weiterhin bestehend aus:
4. Mittel zur Entgegennahme ausgehender Anrufe von Neben-Mobiltelefonen im besagten zweiten Eingangsmodus und zum selektiven Verbinden entgegengenommener ausgehender Anrufe an andere Neben-Mobiltelefone oder an besagtes Fernmeldenetz.

4. Die Zentralvorrichtung gemäß Anforderung 1, in dem besagten ersten und zweiten Mittel aus einem Hauptknopf bestehen.

5. Die Zentralvorrichtung gemäß Anforderung 2 oder 3, in dem besagten dritten oder vierten Mittel aus einem zweiten Knopf bestehen.

6. Die Zentralvorrichtung gemäß den Anforderungen 1, 2 oder 3, in dem besagten ersten bis vierten Mittel über Mittel zur Auswahl einer Option aus einem Menü verfügen.

7. Die Zentralvorrichtung gemäß den Anforderungen 1,2 oder 3, die des weiteren über einen ersten Indikator verfügt der anzeigt, dass ein erster Anruf in der Zentralvorrichtung eingegangen ist, und einen zweiten Indikator der anzeigt, dass ein zweiter Anruf in der Zentralvorrichtung eingegangen ist.

8. Eine Methode für wählbar kontrollierende Verbindungen zwischen einer großen Anzahl von Mobiltelefonen und einem Femsprechnetz, welche die folgenden Schritte umfasst: Bereitstellung eines Telefoncontrollers, der aus einem Haupt-Mobiltelefon besteht; Bereitstellung einer großen Anzahl von Neben-Mobiltelefonen, jedes einzelne der besagten Nebentelefone ist umschaltbar zwischen einem ersten Ausgangsmodus, in dem besagtes Nebentelefon Anrufe an das besagte Netz tätigen kann und einem zweiten Ausgangsmodus, in dem besagtes Nebentelefon gesperrt ist, Anrufe an besagtes Netz zu tätigen und umschaltbar zwischen einem ersten Eingangsmodus, in dem das besagte Nebentelefon Anrufe aus dem besagten Netz erhalten kann und einem zweiten Eingangsmodus, in dem das besagte Nebentelefon gesperrt ist, Anrufe aus besagtem Netz zu empfangen; und Benutzung des besagten Controllers: um unabhängig besagten Eingangs- und Ausgangsmodus der besagten Neben-Mobiltelefone zu kontrollieren; um eingehende Anrufe an besagte Nebentelefone im zweiten Eingangsmodus entgegenzunehmen und besagte empfangene Anrufe zu einer der besagten Nebentelefone selektiv umzuleiten; und um ausgehende Anrufe von besagten Nebentelefonen in besagtem zweiten Ausgangsmodus entgegenzunehmen und besagte entgegengenommene Anrufe mit dem besagten Netz selektiv zu verbinden.

9. Die Methode der Anforderung 8, in welcher die Benutzung des besagten Controllers, den Eingangs- und Ausgangsmodus der besagten Neben-Mobiltelefone unabhängig zu kontrollieren, den Schritt umfasst, einen Hauptknopf auf dem besagten Telefoncontroller zu betätigen.

10. Die Methode der Anforderung 8, in welcher die Benutzung des besagten Controllers, den Eingangs- und Ausgangsmodus der besagten Neben-Mobiltelefone unabhängig zu kontrollieren, den Schritt umfasst, die Option aus einem Menü auf dem besagten Telefoncontroller auszuwählen.

11. Die Methode aus Anforderung 8, in welcher die Benutzung des besagten Controllers, besagte erhaltene Anrufe an eines der besagten Nebentelefone selektiv umzuleiten den Schritt beinhaltet, einen zweiten Knopf auf besagtem Telefoncontroller zu betätigen.

12. Die Methode aus Anforderung 8, in welcher die Benutzung des besagten Controllers, eingehende Anrufe für besagte Nebentelefone im besagten zweiten Eingangsmodus entgegenzunehmen und besagte entgegengenommene Anrufe zu einer der besagten Nebentelefone selektiv umzuleiten, den Schritt beinhaltet, eine Option aus einem Menü auf dem besagten Telefoncontroller auszuwählen.

13. Die Methode aus Anforderung 11, in der das besagte Telefon über einen ersten Indikator verfügt, der anzeigt, dass besagter Controller einen ersten Anruf erhalten hat und einen zweiten Indikator der anzeigt, dass besagter Controller einen zweiten Anruf erhalten hat.

14. Ein Mobiltelefon-Steuerungssystem für wählbar kontrollierende Verbindungen zwischen einer großen Anzahl von Mobiltelefonen und einem Fernsprechnetz, das umfasst: einen Telefoncontroller, bestehend aus einem Haupt-Mobiltelefon; einer großen Anzahl von Neben-Mobiltelefonen, jedes der besagten Nebentelefone ist umschaltbar zwischen einem ersten Ausgangsmodus, in dem besagten Nebentelefon Anrufe an besagtes Netz tätigen kann und einem zweiten Ausgangsmodus, in dem besagten Nebentelefon gesperrt ist, Anrufe an besagtes Netz zu tätigen und umschaltbar zwischen einem ersten Eingangsmodus, in dem besagten Nebentelefon Anrufe von besagtem Netz entgegennehmen kann und einem zweiten Eingangsmodus, in dem das besagte Nebentelefon gesperrt ist, Anrufe aus dem besagten Netz entgegenzunehmen; und in dem besagten Controller fungiert als: unabhängige Kontrolle besagten Eingangs- und Ausgangsmodus des besagten Nebentelefons; einen eingehenden Anruf für besagte Nebentelefone in besagtem zweitem Eingangsmodus entgegenzunehmen und besagten entgegengenommenen Anruf an eines der besagten Nebentelefone selektiv umzuleiten; und, ausgehende Anrufe von besagten Nebentelefonen im besagten zweiten Ausgangsmodus entgegenzunehmen und besagte entgegengenommene Anrufe mit dem besagten Netz selektiv zu verbinden.

15. Das System aus Anforderung 14, in dem besagten Controller über einen Hauptknopf als Kontrollmittel des Eingangs- und Ausgangsmodus der besagten Neben-Mobiltelefone verfügt.

16. Das System aus Anforderung 14, in dem besagten Controller über ein Menü verfügt, das einem Benutzer erlaubt, den Eingangs- und Ausgangsmodus der besagten Neben-Mobiltelefone zu kontrollieren.

17. Das System aus Anforderung 14, in dem der besagte Controller über einen zweiten Knopf als Mittel zur selektiven Umleitung besagter erhaltener Anrufe an eines der besagten Nebentelefone verfügt.

18. Das System aus Anforderung 14, in dem besagten Controller über ein Menü verfügt, das einem Benutzer erlaubt, den besagten entgegengenommenen Anruf an eines der besagten Nebentelefone selektiv umzuleiten.

19. Das System aus Anforderung 17, in dem besagten Telefoncontroller über einen ersten Indikator verfügt, der anzeigt, dass besagter Controller einen ersten Anruf erhalten hat und einen zweiten Indikator, der anzeigt, dass besagter Controller einen zweiten Anruf erhalten hat.

20. Das System aus Anforderung 14, in dem der besagte Telefoncontroller über ein Display zum Anzeigen von Informationen über die Länge oder die Kosten eines Anrufs an eines oder von einem der besagten Nebentelefone verfügt.

21. Das System aus Anforderung 14, in dem besagten Telefoncontroller über ein Display verfügt, auf den Informationen hinsichtlich des Status des Eingangs- und Ausgangsmodus der besagten Nebentelefone angezeigt werden.

22. Das System aus Anforderung 14, in dem besagten Telefoncontroller über ein Display verfügt, auf den Informationen zur Identifikation des Nebentelefons, an den ein bestimmter, erhaltener Anruf gerichtet wird, angezeigt werden.

23. Eine Methode zur selektiven Kontrolle der Kosten, eine große Anzahl von Mobiltelefonen mit einem Fernsprechnetz zu verbinden, bestehend aus den Schritten: Bereitstellung eines Telefoncontrollers, der aus einem Haupt-Mobiltelefon besteht, Bereitstellung einer großen Anzahl von Neben-Mobiltelefonen, die umschaltbar sind zwischen einem ersten Ausgangsmodus, in dem besagten Nebentelefon Anrufe an besagtes Netz tätigen kann und dabei Netzgebühren verursacht und einem zweiten Ausgangsmodus, in dem besagten Nebentelefon gesperrt ist, Anrufe an besagtes Netz zu tätigen und von Netzgebühren gesperrt ist und umschaltbar zwischen einem ersten Eingangsmodus, in dem besagten Nebentelefon Anrufe von besagtem Netz erhalten kann und einem zweiten Eingangsmodus, in dem besagten Nebentelefon gesperrt ist, Anrufe von besagtem Netz zu erhalten; und der Benutzung des besagten Controllers: die Netzgebühren, die von der besagten großen Anzahl von Neben-Mobiltelefonen verursacht wurden durch unabhängige Kontrolle des besagten Eingangs- und Ausgangsmodus der besagten Neben-Mobiltelefone zu kontrollieren; eingehende Anrufe für besagte Neben-Mobiltelefone im zweiten Eingangsmodus entgegenzunehmen und besagte entgegengenommene Anrufe an eines der besagten Nebentelefone selektiv umzuleiten; und ausgehende Anrufe von besagten Nebentelefonen im besagten zweiten Ausgangsmodus entgegenzunehmen und besagte entgegengenommene Anrufe mit dem besagten Netz selektiv zu verbinden.

24. Die Methode aus Anforderung 23, in der die besagte große Anzahl der Nebentelefone von Netzgebühren gesperrt ist, wenn sie sich im besagten zweiten Eingangsmodus befinden.

## Revendications

1. Une unité centrale permettant de commander de manière sélective les connexions entre plusieurs téléphones mobiles secondaires et un réseau téléphonique qui est doté :
- en premier lieu, des moyens permettant de faire passer les dits téléphones mobiles secondaires d'un premier état où ceux-ci peuvent effectuer des appels téléphoniques dans le réseau téléphonique en question et un second état où les téléphones mobiles secondaires ne sont pas autorisés d'effectuer des appels dans le réseau téléphonique en question ; et
- en deuxième lieu, de moyens permettant de faire passer les dits téléphones mobiles secondaires d'un premier état de réception d'appels téléphoniques où les dits téléphones mobiles secondaires peuvent recevoir des appels du réseau téléphonique en question et un second état où les téléphones mobiles secondaires ne sont pas autorisés de recevoir des appels téléphoniques du réseau téléphonique en question.

2. L'unité centrale d'après la revendication 1, étant de plus dotée :
En troisième lieu, de moyens lui permettant de recevoir des appels téléphoniques s'adressant aux téléphones mobiles secondaires qui sont dans le second état de réception d'appels et d'acheminer de manière sélective les appels téléphoniques en question vers un des dits téléphones mobiles secondaires.

3. L'unité centrale, d'après la revendication 1 ou 2, étant de plus dotée :
En quatrième lieu, de moyens lui permettant de recevoir des appels téléphoniques provenant de téléphones mobiles secondaires, qui se trouvent dans le dit second état de réception d'appels téléphoniques, et d'établir la connexion entre les appels reçus et un autre téléphone mobile secondaire ou le dit réseau téléphonique.

4. L'unité centrale d'après la revendication 1 où le dit premier et le dit deuxième moyens comprennent une première touche.

5. L'unité centrale d'après les revendications 2 ou 3 où le dit troisième ou le dit quatrième moyen comprennent une deuxième touche.

6. L'unité centrale d'après la revendication 1, 2 ou 3 où le dit premier jusqu'au quatrième moyen comprend des moyens permettant de sélectionner une option à partir d'un menu.

7. L'unité centrale d'après la revendication 1, 2 ou 3, comprenant de plus un premier voyant indiquant qu'un premier appel est reçu à l'unité centrale, et un second voyant indiquant qu'un second appel est reçu à l'unité centrale.

8. Une méthode permettant de commander de manière sélective les connexions entre plusieurs téléphones mobiles et un réseau téléphonique selon les étapes suivantes : fournir un contrôleur téléphonique comprenant un premier téléphone mobile ; foumir plusieurs téléphones mobiles secondaires dont chacun peut passer d'un premier état de réalisation d'appels téléphoniques, où le dit téléphone secondaire peut réaliser des appels dans le réseau téléphonique en question, à un second état de réalisation d'appels téléphoniques où le dit téléphone secondaire n'est pas autorisé d'effectuer des appels téléphoniques dans le dit réseau téléphonique. De même, les téléphones mobiles secondaires peuvent passer d'un premier état de réception d'appels téléphoniques, où le dit téléphone secondaire peut recevoir des appels provenant du réseau téléphonique en question, à un second état de réception d'appels téléphoniques où le dit téléphone secondaire n'est pas autorisé de recevoir des appels téléphoniques dans le dit réseau téléphonique. Et, à l'aide de la dite commande : de commander de manière indépendante les dits états de réalisation et de réception d'appels téléphoniques des dits téléphones mobiles secondaires ; de recevoir des appels adressés aux téléphones secondaires ayant été placés dans le second état de réception et d'acheminer de manière sélective les dits appels reçus vers un des dits téléphones secondaires ; et de recevoir des appels provenant des dits téléphones secondaires ayant été placés dans le dit deuxième état de réalisation d'appels et d'établir la connexion entre les dits appels reçus et le dit réseau.

9. La méthode de la revendication 8 où l'étape d'utilisation de la dite commande permettant de contrôler de manière indépendante les états de réception et de réalisation d'appels téléphoniques des dits téléphones mobiles secondaires comprend l'étape qui consiste à déclencher un premier moyen par touche sur la dite commande téléphonique.

10. La méthode de la revendication 8 où l'étape d'utilisation de la dite commande permettant de contrôler de manière indépendante les états de réception et de réalisation d'appels téléphoniques des dits téléphones mobiles secondaires comprend l'étape qui consiste à sélectionner une option à partir du menu sur la dite commande téléphonique.

11. La méthode of revendication 8 où l'étape d'utilisation de la dite commande de réception achemine de manière sélective les dits appels reçus vers un des dits téléphone secondaires comprend l'étape qui consiste à déclencher une seconde touche sur la dite commande téléphonique.

12. La méthode de la revendication 8 où l'étape d'utilisation du dit contrôleur afin de recevoir des appels adressés aux dits téléphones secondaires ayant été places dans le dit second état de réception d'appels et d'acheminer de manière sélective les appels reçus vers un des dits téléphones secondaires comprend l'étape de sélection d'une option à partir d'un menu sur le dit contrôleur téléphonique.

13. La méthode de la revendication 11 où le dit téléphone comprend un premier voyant permettant d'indiquer qu'un premier appel a été reçu au dit contrôleur et un second voyant permettant d'indiquer qu'un second appel a été reçu au dit contrôleur.

14. Un système de contrôle de téléphone mobile permettant de commander de manière sélective les connexions entre plusieurs téléphones mobiles et un réseau téléphonique comprenant : un contrôleur téléphonique ; plusieurs téléphones mobiles secondaires, chacun des dits téléphones secondaires pouvant passer d'un premier état de réalisation d'appels téléphoniques, où le dit téléphone secondaire peut réaliser des appels dans le réseau téléphonique en question, à un second état de réalisation d'appels téléphoniques où le dit téléphone secondaire n'est pas autorisé d'effectuer des appels téléphoniques dans le dit réseau téléphonique. De même, les téléphones mobiles secondaires peuvent passer d'un premier état de réception d'appels téléphoniques, où le dit téléphone secondaire peut recevoir des appels provenant du réseau téléphonique en question, à un second état de réception d'appels téléphoniques où le dit téléphone secondaire n'est pas autorisé de recevoir des appels téléphoniques dans le dit réseau téléphonique. Et, où le dit contrôleur téléphonique fonctionne de manière à : commander de manière indépendante les dits états de réalisation et de réception d'appels téléphoniques des dits téléphones mobiles secondaires ; recevoir des appels adressés aux téléphones secondaires ayant été placés dans le second état de réception et acheminer de manière sélective les dits appels reçus vers un des dits téléphones secondaires ; et recevoir des appels provenant des dits téléphones secondaires ayant été placés dans le dit deuxième état de réalisation d'appels et d'établir la connexion entre les dits appels reçus et le dit réseau.

15. Le système de la revendication 14 où le dit contrôleur comprend une première touche, moyen permettant de contrôler les états de réalisation et de réception d'appels des dits téléphones mobiles secondaires.

16. Le système de la revendication 14 où le dit contrôleur comprend un menu, moyen permettant à l'utilisateur de contrôler les états de réalisation et de réception d'appels des dits téléphones mobiles secondaires.

17. Le système de la revendication 14 où le dit contrôleur comprend une deuxième touche, moyen permettant d'acheminer de manière sélective des appels reçus vers un des dits téléphones secondaires.

18. Le système de la revendication 14 où le dit contrôleur comprend un menu, moyen permettant à l'utilisateur d'acheminer de manière sélective des appels reçus vers un des dits téléphones secondaires.

19. Le système de la revendication 17 où le dit contrôleur téléphonique comprend un premier voyant permettant d'indiquer qu'un premier appel a été reçu au dit contrôleur et un second voyant permettant d'indiquer qu'un second appel a été reçu au dit contrôleur.

20. Le système de la revendication 14 où le dit contrôleur téléphonique comprend des moyens d'affichage permettant d'afficher les informations concernant la durée ou le coût d'un appel réalisé ou reçu par un des dits téléphones secondaires.

21. Le système de la revendication 14 où le dit contrôleur téléphonique comprend des moyens d'affichage permettant d'afficher des informations concemant l'état de réception ou de réalisation d'appels téléphoniques des dits téléphones secondaires.

22. Le système de la revendication 14 où le dit contrôleur téléphonique comprend des moyens d'affichage permettant d'afficher des informations identifiant le téléphone secondaire vers lequel un appel reçu précis est dirigé.

23. Une méthode permettant de contrôler de manière sélective le coût de connexion de plusieurs téléphones mobiles à un réseau téléphonique comprenant les étapes suivantes : fournir un contrôleur téléphonique comprenant un premier téléphone mobile ; fournir plusieurs téléphones mobiles secondaires dont chacun peut passer d'un premier état de réalisation d'appels téléphoniques, où le dit téléphone secondaire peut réaliser des appels dans le réseau téléphonique en question et encourir des frais de réseau, à un second état de réalisation d'appels téléphoniques où le dit téléphone secondaire n'est pas autorisé d'effectuer des appels téléphoniques dans le dit réseau téléphonique et ne peut encourir des frais de réseau. De même, les téléphones mobiles secondaires peuvent passer d'un premier état de réception d'appels téléphoniques, où le dit téléphone secondaire peut recevoir des appels provenant du réseau téléphonique en question, à un second état de réception d'appels téléphoniques où le dit téléphone secondaire n'est pas autorisé de recevoir des appels téléphoniques dans le dit réseau téléphonique. Et, à l'aide du dit contrôleur : de contrôler les frais de réseau encourus par les dits plusieurs téléphones mobiles secondaires en contrôlant de manière indépendante les dits états de réalisation et de réception d'appels téléphoniques des dits téléphones mobiles secondaires ; de recevoir des appels adressés aux téléphones secondaires ayant été placés dans le second état de réception et d'acheminer de manière sélective les dits appels reçus vers un des dits téléphones secondaires ; et de recevoir des appels provenant des dits téléphones secondaires ayant été placés dans le dit deuxième état de réalisation d'appels et d'établir la connexion entre les dits appels reçus et le dit réseau.

24. La méthode de la revendication 23 où les dits plusieurs téléphones secondaires sont interdits d'encourir des frais de réseau lorsqu'ils sont places dans le dit second état de réception d'appels téléphoniques.
